# FASCICULE DE BREVET EUROPEEN

(11) **EP 3 434 511 B1**
(45) Date de publication et mention de la délivrance du brevet: **06.11.2019**
(21) Numéro de dépôt: 18175256.9
(22) Date de dépôt: 30.05.2018
(51) Int. Cl.: B60N 2/28, B60Q 3/233, B60Q 3/242, B60N 2/00

(54) **SIÈGE AUTO POUR ENFANT À MOYENS D'ÉCLAIRAGE AUTOMATIQUE**
AUTO-KINDERSITZ MIT AUTOMATISCHEN BELEUCHTUNGSMITTELN
CHILD CAR SEAT WITH AUTOMATIC LIGHTING MEANS

(30) Priorité: 28.07.2017 FR 1757196
(43) Date de publication de la demande: 30.01.2019
(73) Titulaire: Dorel France, 49309 Cholet Cedex (FR)
(72) Inventeur: DUPUY, Julien, 49280 Mazières en Mauges (FR); POUZIN, Emmanuel, 49300 Cholet (FR)
(74) Mandataire: Vidon Brevets & Stratégie

(56) Documents cités:
- EP-A1- 2 834 101
- WO-A2-2007/054593
- US-A1- 2016 339 838

## Description

### 1. Domaine de l'invention

Le domaine de l'invention est celui de la puériculture, et plus précisément des sièges auto pour enfant, destinés à être installés dans un véhicule automobile. Plus précisément encore, l'invention concerne les sièges auto dans lesquels l'enfant est maintenu par une ceinture de sécurité du véhicule.

### 2. Art antérieur

On peut distinguer deux grandes catégories de siège auto pour enfant. Dans les premiers, destinés aux enfants les moins âgés et les moins lourds, l'enfant est retenu dans son siège à l'aide de moyens de retenue dédiés, intégrés au siège, classiquement un harnais. La deuxième catégorie, destinée aux enfants plus âgés, de taille et de poids plus élevés, ne comprennent en revanche pas de moyens de retenue intégrés, et on utilise la ceinture de sécurité du véhicule pour retenir l'enfant, de même qu'un adulte. Le siège pour enfant (souvent appelé « rehausseur » ou « booster ») a alors pour fonction notamment de rehausser et de maintenir l'enfant.

En outre, il doit guider efficacement les sangles ventrales et/ou abdominales de la ceinture de sécurité, pour que celles-ci se placent de façon sûre, au niveau des jambes, de l'abdomen, du torse, des épaules et/ou du cou de l'enfant. Il est en effet important que ces sangles, qui sont conçues et dimensionnées pour un adulte, protègent efficacement l'enfant en cas de chocs, en évitant ou réduisant les risques de blessures dues notamment à un mauvais placement de la ceinture de sécurité.

Pour ceci, des passages de sangle, des guide-sangles ou plus généralement des zones spécifiques sont prévus sur le siège, pour recevoir, guider et/ou maintenir les sangles de façon adaptée. L'installation de ces sangles n'est cependant pas toujours aisée ni intuitive, du fait qu'il convient de combiner sécurité et ergonomie. En outre, le trajet des sangles varie, selon la position du siège dans le véhicule.

Par ailleurs, le verrouillage final de la ceinture de sécurité, c'est-à-dire l'introduction du crochet mâle, monté sur la sangle dans le réceptacle femelle solidaire du siège du véhicule, parfois en partie dissimulé dans un creux entre le dossier et l'assise de ce siège de véhicule est souvent difficile, d'autant plus que le bord du siège auto peut dissimuler ou rendre peu visibles les éléments à assembler. Cette manœuvre se fait généralement à tâtons.

Ces opérations d'installation sont déjà peu aisées pour un adulte. Elles peuvent l'être encore plus pour un enfant, installé dans le siège, et qui est en âge de s'installer lui-même. Il peut alors être souhaitable de laisser l'enfant s'installer lui-même, pour des raisons d'apprentissage de la sécurité, de reconnaissance et/ou de confort.

On connaît des sièges auto intégrant des éclairages de l'enfant et de l'espace dans lequel il est installé, par exemple des documents US6126233, DE102014007619 ou US2006181120. Le document EP2834101 prévoit quant à lui un éclairage placé sur le côté d'un siège, mais il nécessite une action spécifique, via un interrupteur devant la plupart du temps être actionné par un adulte.

L'invention a notamment pour objectif, selon certains modes de réalisation, de rendre plus aisée cette installation de la ceinture de sécurité, et de permettre que ceci puisse être effectué par un enfant installé dans le siège, de façon simple, intuitive et sûre.

Un autre objectif de l'invention est, selon certains modes de réalisation, une telle approche, permettant à un adulte de vérifier que cette installation a été effectuée de façon correcte.

### 3. Caractéristiques principales et optionnelles de l'invention

Cet objectif, ainsi que d'autres qui apparaîtront plus précisément par la suite, sont atteints selon l'invention à l'aide d'un siège auto pour enfant, comprenant au moins une assise et des moyens de guidage et/ou de maintien d'une sangle de ceinture de sécurité d'un véhicule automobile, et des moyens d'éclairage, montés sur au moins un côté dudit siège et orientés vers l'extérieur de celui-ci, aptes à éclairer un espace de verrouillage de ladite ceinture de sécurité, de façon à permettre à un enfant installé dans ledit siège de repérer un élément femelle de verrouillage devant recevoir un élément mâle correspondant monté sur ladite ceinture de sécurité.

Selon l'invention, le siège auto comprend des moyens de détection de présence dudit enfant coopérant avec des moyens d'activation desdits moyens d'éclairage, de façon à activer lesdits moyens d'éclairage lorsqu'un enfant s'installe dans ledit siège.

Ainsi, l'enfant est incité à installer la ceinture de sécurité et la verrouiller dès qu'il s'assied dans le siège, puisque ceci provoque l'éclairage de la zone de verrouillage, attirant son attention si nécessaire. Ce verrouillage est par ailleurs facilité, l'éclairage permettant une meilleure vision des éléments à assembler, et donc un verrouillage plus facile. En outre, l'adulte accompagnateur peut vérifier, directement via un rétroviseur, que le verrouillage a été correctement effectué, puisque la zone correspondante est éclairée.

Selon un mode de réalisation particulier de l'invention, les moyens de détection comprennent au moins un capteur de poids dans l'assise et/ou dans un dossier du siège.

Selon un mode de réalisation particulier de l'invention, le siège auto comprend des moyens de temporisation, interrompant l'éclairage au-delà d'un laps de temps prédéterminé.

Ainsi, les moyens d'éclairage peuvent se désactiver automatiquement, lorsqu'un temps a priori suffisant pour le verrouillage c'est écoulé. Ceci permet notamment de minimiser la consommation énergétique et de ne pas perturber le conducteur dans sa conduite.

.Un interrupteur peut être prévu sur et/ou à côté des moyens d'éclairage, pour rallumer et/ou éteindre ceux-ci en cas de besoin.

Selon une approche particulière de l'invention, le siège auto comprend des moyens d'éclairage sur chaque côté dudit siège.

Ainsi, le siège auto peut être installé sur chaque siège du véhicule car les différentes zones de verrouillage possibles du véhicule, à savoir soit à gauche soit à droite du siège auto, sont éclairées.

Un sélecteur peut être prévu, pour sélectionner, lors de l'installation du siège dans le véhicule, le côté à éclairer. Il est également possible que les deux côtés soient systématiquement éclairés.

Selon une autre approche particulière de l'invention, le siège auto comprend des moyens d'éclairage uniques, amovibles de façon à pouvoir être montés sur l'un ou l'autre des côtés dudit siège.

Ainsi, les moyens d'éclairage uniques peuvent être installés spécifiquement du côté de la zone de verrouillage du véhicule utilisée. Une telle configuration permet de réduire le nombre de composant et ainsi de minimiser les coûts de production notamment.

Selon un autre aspect particulier de l'invention, le siège auto comprend au moins un indicateur lumineux, placé à proximité d'un passage de sangle de ladite ceinture de sécurité, de façon à aider ledit enfant présent dans le siège à installer seul ladite ceinture de sécurité.

Ainsi, l'enfant peut aisément identifier la position des différents passages de sangle du siège auto dans lesquels il doit placer cette sangle pour être maintenu convenablement. Dans certaines mises en œuvre, il est possible d'utiliser de tels indicateurs lumineux indépendamment des moyens d'éclairage décrits précédemment. Dans ce cas, des moyens de détection de présence et d'activation des indicateurs restent avantageux.

Selon un aspect particulier de l'invention, le passage de sangle est associé à un capteur de présence et/ou de tension de sangle, assurant une extinction, un clignotement et/ou un changement de couleur de l'indicateur lumineux lorsque ladite sangle est placée et/ou est tendue correctement dans ledit passage de sangle.

Ainsi, l'enfant et/ou l'adulte accompagnateur sont informés de manière simple et efficace que la ceinture de sécurité est correctement installée dans le passage de sangle. Un tel capteur permet en outre de limiter les vérifications manuelles et/ou visuelles de l'état d'installation de la ceinture (de telles vérifications nécessitant généralement l'intervention de l'adulte accompagnateur).

Selon un mode de réalisation particulier de l'invention, le siège auto comprend des moyens de séquencement de l'allumage, de l'extinction, du clignotement et/ou du changement de couleur dudit au moins un indicateur lumineux et/ou desdits moyens d'éclairage.

Ainsi, l'activation successive des moyens lumineux et/ou des moyens d'éclairage permet à l'enfant d'identifier clairement et rapidement le cheminement de la ceinture de sécurité devant être réalisé au travers des différents passages de sangle et/ou l'ordre d'utilisation de ceux-ci.

Selon un aspect particulier de l'invention, le siège auto porte au moins deux indicateurs lumineux et au moins deux passages de sangle distincts, et l'allumage desdits indicateurs lumineux suit ainsi le cheminement de ladite ceinture de sécurité lors de son installation.

Selon un mode de réalisation particulier de l'invention, les moyens de séquencement génèrent au moins un signal lumineux et/ou sonore confirmant une installation et/ou un verrouillage corrects de ladite ceinture de sécurité.

Ainsi, la variation d'état des moyens lumineux et/ou des moyens d'éclairage permet à l'enfant d'être informé de l'état d'installation de la ceinture de sécurité. En outre, l'adulte accompagnateur peut vérifier, par exemple via un rétroviseur, que le cheminement de la ceinture au travers des passages de sangle a été correctement effectué, puisque les moyens lumineux et/ou des moyens d'éclairage évoluent selon l'état d'installation de la ceinture dans chaque passage de sangle.

Selon un autre mode de réalisation particulier de l'invention, le siège auto comprend des moyens de sélection d'une position dudit siège, par rapport audit élément femelle de verrouillage, sélectionnant un côté dudit siège à éclairer par lesdits moyens d'éclairage et/ou dudit au moins un indicateur lumineux à activer.

Ainsi, l'enfant n'est pas incité à utiliser le ou les passages de sangle qui ne sont pas destinés à être utilisés. Une telle configuration permet donc de simplifier l'installation de l'enfant da le siège auto et/ou de la ceinture de sécurité.

La présente invention porte en outre sur un procédé d'aide à l'installation d'une sangle de ceinture de sécurité d'un véhicule automobile dans un siège auto pour enfant comprenant des moyens d'éclairage, montés sur au moins un côté dudit siège et orientés vers l'extérieur de celui-ci, aptes à éclairer un espace de verrouillage de ladite ceinture de sécurité, de façon à permettre à un enfant installé dans ledit siège de repérer un élément femelle de verrouillage devant recevoir un élément mâle correspondant monté sur ladite ceinture de sécurité.

Selon l'invention, le procédé d'aide à l'installation d'une sangle de ceinture de sécurité d'un véhicule automobile dans un siège auto pour enfant comprend notamment les étapes de :
- détection de présence dudit enfant ;
- activation desdits moyens d'éclairage, de façon à activer lesdits moyens d'éclairage lorsque ladite étape de détection indique qu'un enfant s'installe dans ledit siège.

Ainsi, l'activation des moyens d'éclairage est réalisée de manière automatique lorsque l'enfant est installé dans le siège auto. Une telle configuration permet de s'affranchir de la mise en œuvre d'un moyen manuel d'activation de l'éclairage qui peut être difficile d'accès, selon le positionnement du siège auto, et dont la désactivation peut être omise lorsque l'enfant se désinstalle du siège auto, ou est désinstallé de celui-ci par un adulte accompagnateur. Une telle configuration permet donc de minimiser les actions à effectuer lors de l'installation de l'enfant et d'optimiser l'alimentation électrique du siège auto.

Selon un aspect particulier, le procédé comprend une étape d'allumage d'au moins un indicateur lumineux, placé à proximité d'un passage de sangle de ladite ceinture de sécurité, piloté de façon à aider ledit enfant présent dans le siège à installer seul ladite ceinture de sécurité.

### 4. Exposé des figures

D'autres caractéristiques et avantages de l'invention apparaîtront plus clairement à la lecture de la description d'un mode de réalisation particulier, fourni à titre de simple exemple illustratif et non limitatif, et des dessins annexés, parmi lesquels :
- la figure 1 illustre un exemple de siège auto selon l'invention, muni de moyens d'éclairage et de moyens d'activation de cet éclairage ;
- la figure 2a et 2b illustre la mise en œuvre de moyens indicateurs du cheminement des sangles et/ou de leurs bons positionnements ;
- la figure 3 illustre de façon schématique le procédé de gestion de l'éclairage de la figure 1 ;
- la figure 4 est un organigramme simplifié d'un mode de réalisation de mise en œuvre des moyens indicateurs des figures 2a et 2b ;
- les figures 5a à 5d sont des vues focalisées sur différentes zones de l'organigramme simplifié de la figure 4.

### 5. Description détaillée d'un mode de réalisation

### 5.1 éclairage de l'espace de verrouillage

Un siège auto selon un premier aspect de l'invention permet de faciliter le verrouillage de la ceinture de sécurité du véhicule par la présence de moyens d'éclairage disposés sur le siège auto. De tels moyens d'éclairage sont configurés pour illuminer le ou les espaces ou zones de verrouillage présents dans le véhicule, c'est-à-dire la ou les régions dans laquelle ou lesquelles les éléments femelles de verrouillage sont présents.

La zone de verrouillage étant ainsi éclairée clairement visible, l'opération de verrouillage de la ceinture peut aisément être réalisée par un enfant ou par un adulte si l'enfant n'est pas apte à réaliser le verrouillage de manière autonome.

Lors de l'installation de l'enfant dans le siège auto, un capteur détecte la présence de l'enfant activant ainsi les moyens d'éclairage configurés pour illuminer les zones de verrouillage de la ceinture de sécurité du véhicule.

L'activation de cet éclairage attire l'attention et incite l'enfant à installer et verrouiller sa ceinture de sécurité. Un clignotement initial peut être prévu, toujours dans le but d'attirer l'attention. Le verrouillage est rendu plus aisé, du fait de l'éclairage de la zone concernée.

Une temporisation assure l'extinction de l'éclairage au bout d'un laps de temps prédéterminé, par exemple compris entre 15 et 30 secondes. Un bouton complémentaire d'allumage peut être prévu pour réactiver l'éclairage si nécessaire.

En variante, l'extinction de l'éclairage peut être piloté par des moyens détectant le verrouillage de la ceinture de sécurité.

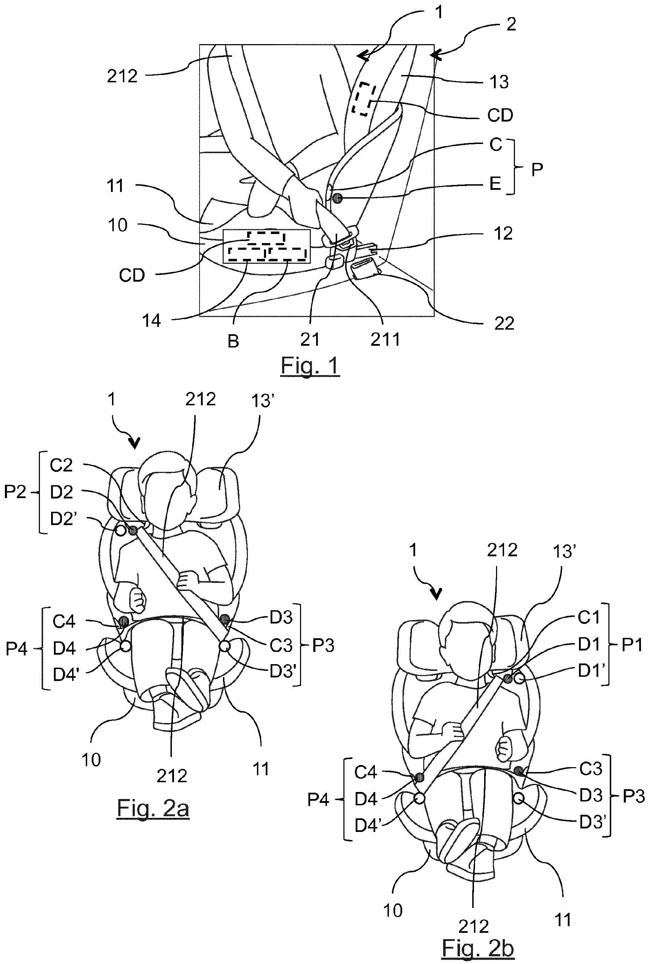

La figure 1 représente un siège auto 1 selon un mode réalisation de l'invention. Ce siège auto 1 est destiné à être monté sur un siège 2 de véhicule. Dans certains cas, le siège auto 1 peut comprendre pour ceci des moyens de solidarisation 12 adaptés, connus de l'homme du métier. Ces moyens de solidarisation 12 peuvent notamment comprendre des pinces de fixation, connu sous le nom « pinces ISOFIX » fixées à proximité de l'extrémité arrière de la base 10 du siège auto 1. De telles pinces de fixation peuvent venir se solidariser sur des anneaux d'ancrage, qui ne sont pas représentés sur la figure 1, spécifiquement situés entre l'assise et le dossier du siège 2 du véhicule. Le siège 2 de véhicule comprend un élément femelle de verrouillage 22 adapté pour recevoir un élément mâle de verrouillage 211 complémentaire disposé sur une ceinture de sécurité 21.

La plupart du temps, le siège auto ne comprend pas de moyens spécifiques de solidarisation au véhicule, et il est maintenu directement, avec l'enfant, lorsque ce dernier est installé, par la ceinture de sécurité.

Le siège auto 1 comprend une assise 11 et un dossier 13 comprenant des guidages et/ou passages P de ceinture de sécurité 21. Tel que représenté sur la figure 1, seul le guidage et/ou passage de ceinture inférieur gauche est représenté. Toutefois, le siège auto 1 comprend généralement plusieurs guidages et/ou passages P de ceinture de sécurité tel qu'il le sera décrit ultérieurement.

Dans des variantes, le siège auto peut ne comprendre qu'une assise, et/ou le dossier être amovible.

Le siège auto 1 comprend au moins un capteur de présence CD de l'enfant, par exemple un capteur de poids, pouvant être situé dans l'assise 11 et/ou dans le dossier 13. Il peut notamment s'agir d'un contacteur, monté sous une plaque déplacée lorsque l'enfant s'installe dans le siège, faisant passer le contacteur d'une position ouverte à une position fermée. D'autres types de capteurs (accéléromètres, capteurs optiques, ...) peuvent bien sûr être utilisés. Le nombre et la disposition des moyens de détection de présence de l'enfant peuvent varier selon les besoins.

Le siège auto 1 comprend en outre des moyens d'activation 14 d'un moyen d'éclairage E, une batterie B et un capteur du niveau de charge de batterie, qui n'est pas représenté. La batterie B peut alimenter l'ensemble des composants électriques intégrés au siège auto, permettant ainsi de garantir son indépendance électrique vis-à-vis du véhicule.

Selon le mode de réalisation illustré, le moyen d'éclairage E est situé sur la portion latérale inférieure du dossier 13. Il peut être envisagé que le moyen d'éclairage E soit situé sur une autre portion du siège auto, notamment sur la base 10, à condition qu'un tel emplacement permette au moyen d'éclairage E d'éclairer la région dans laquelle l'élément de verrouillage femelle 22 du véhicule se trouve.

Il peut y avoir plusieurs éléments d'éclairage. Cet éclairage peut notamment mettre en œuvre des LEDs. Généralement, des moyens d'éclairage similaires sont prévus sur les côtés gauche et droit. Pour la suite de la description, les termes « gauche » et « droit(e) » correspondent à la gauche et à la droite de l'enfant lorsqu'il est installé dans le siège auto.

Des moyens de sélection du côté actif (côté sur lequel le verrouillage de la ceinture de sécurité doit être effectué) peuvent être prévus. Cette sélection peut être réalisée manuellement, par la personne qui installe le siège dans le véhicule, à l'aide d'un sélecteur prévu à cet effet, ou de façon automatique, par exemple à l'aide d'un capteur de passage de sangle au niveau de la têtière, sur le côté opposé.

Par exemple, le guidage et/ou passage P de ceinture de sécurité peut comprendre un capteur de passage de ceinture C, affleurant la portion du siège auto sur laquelle il est présent, et un moyen d'éclairage E, configuré pour éclairer l'élément femelle de verrouillage 22.

Il est également possible de prévoir que les deux côtés s'allument simultanément.

Selon une autre variante, le moyen d'allumage peut être unique et mobile, l'utilisateur le montant sur le côté utile.

### 5.2 aide à l'installation de la ceinture de sécurité

La figure 2a et 2b illustre la mise en œuvre de moyens indicateurs du cheminement des sangles et/ou de leurs bons positionnements.

Cet aspect peut, dans certains modes de réalisation, être mis en œuvre indépendamment de moyens d'éclairage tels que décrits précédemment. Lorsque de tels moyens d'éclairage sont présents, ils peuvent, selon les modes de réalisation, être contrôlés indépendamment des moyens indicateurs, ou dans le cadre d'un contrôle commun.

L'aide à l'installation de la ceinture peut également s'appliquer aux différentes variantes de sièges, avec ou sans dossier, avec ou sans moyens de solidarisation au véhicule,...

Le siège auto 1 comprend, selon le mode de réalisation illustré, quatre emplacements de guidage et/ou de passage (appelés par la suite « guidage » ou « passage ») P1, P2, P3, P4 des sangles de la ceinture de sécurité. Selon le mode de réalisation illustré, chaque guidage et/ou passage P1, P2, P3, P4 de ceinture de sécurité est associé respectivement un capteur de passage de ceinture C1, C2, C3, C4 et à des moyens indicateurs, typiquement des diodes électroluminescentes (ou LEDs), permettant par exemple d'indiquer à l'enfant installé dans le siège où il doit placer les sangles de ceinture (le cas échéant selon un cheminement prédéterminé), si celles-ci sont bien placées,...

Selon le mode de réalisation illustré, chaque guidage est associé à un premier moyen indicateur D1, D2, D3, D4 et un deuxième moyen indicateur D1', D2', D3', D4' et le cas échéant un moyen sonore, qui n'est pas représenté. Les premiers et deuxièmes moyens indicateurs peuvent notamment être des diodes LED de couleurs différentes, par exemple blanches et vertes, ou être regroupés, sous la forme de diodes LED pouvant prendre plusieurs couleurs.

Dans des variantes, seuls certains guidages et/ou passages, par exemple les passages de sangles inférieurs, sont équipés de tous ou de certains de ces moyens.

Les guidages et/ou passages de ceinture supérieurs gauche P1 et droit P2 sont par exemple situés entre le dossier 13 et la têtière 13' du siège auto 1, ou formés ou portés par cette têtière, de chaque côté de la tête de l'enfant. Les guidages et/ou passages de ceinture inférieurs gauche P3 et droit P4 sont par exemple situés sur les portions latérales inférieures du dossier 13 et/ou sur les portions arrière de l'assise 11, sensiblement au-dessus du croisement entre le dossier 13 et l'assise 11.

L'emplacement et/ou la forme des guidages et/ou passages de ceinture peuvent varier selon la structure et la forme du siège auto 1 notamment. Toutefois, il est préconisé que les guidages et/ou passages de ceinture soient situés à proximité, et de part et d'autre, du bassin et de la tête de l'enfant.

Des moyens électroniques, tels qu'un microcontrôleur, reçoivent des signaux des différents capteurs, et gèrent l'allumage des différents moyens indicateurs, et le cas échéant leur luminosité, leur clignotement, leur couleur,... de façon à délivrer des informations utiles à l'enfant et/ou aux personnes l'accompagnant.

Lorsqu'un enfant s'installe dans le siège, outre l'allumage de l'éclairage décrit précédemment, les indicateurs peuvent s'allumer, par exemple en clignotant, pour rappeler que la ceinture doit être installée et bouclée, et/ou pour illustrer le cheminement que doit suivre celle-ci.

Tel qu'illustré, lorsque la ceinture de sécurité 21 exerce un effort suffisant, correspondant à une valeur seuil préalablement déterminée, contre un capteur de tension (par exemple un élément piézo-électrique) dans le passage de ceinture C1, C2, C3, C4, le premier moyen indicateur D1, D2, D3, D4 associé s'illumine indiquant ainsi à l'utilisateur que la ceinture de sécurité 21 est correctement installée contre le guidage et/ou passage P1, P2, P3, P4 utilisé.

Selon une autre approche, on ne mesure pas une tension de sangle, mais on détecte la présence de cette sangle, par exemple à l'aide d'un capteur optique (la présence de la sangle obturant un passage de lumière).

Si la ceinture de sécurité 21 n'est pas présente et/ou n'exerce pas un effort suffisant contre le capteur de tension dans le passage de ceinture C1, C2, C3, C4, le second moyen indicateur D1', D2', D3', D4' associé s'illumine indiquant à l'utilisateur que l'installation de la ceinture de sécurité 21 contre le guidage et/ou passage P1, P2, P3, P4 utilisé est incorrecte voire inexistante.

La figure 2a illustre un exemple de mise en œuvre de premiers moyens indicateurs D2, D3, D4 et de seconds moyens indicateurs D2', D3', D4' du cheminement des sangles de la ceinture de sécurité et/ou de leurs bons positionnements lorsque le siège auto 1 est situé sur le siège 2 droit du véhicule. Dans une telle position, l'enfant qui vient de s'installer dans le siège (ou le cas échéant un adulte à proximité) lance le suivi de l'installation automatiquement, par la détection de son installation dans le siège. Les moyens indicateurs peuvent par exemple clignoter, pour l'inciter à mettre sa ceinture convenablement.

Ainsi, il insère la sangle supérieure 212 (ou sangle abdominale) de la ceinture de sécurité 21 dans le guidage et/ou passage supérieur droit P2. Puis, en déplaçant l'élément mâle de verrouillage pour le diriger vers l'élément femelle de verrouillage, la sangle supérieure 212 est placée contre le capteur de passage de ceinture C2 activant ainsi le premier moyen indicateur D2 associé.

Puis la sangle inférieure 213 (ou sangle ventrale) se plaque contre le guidage et/ou passage inférieur droit P4. Si la sangle inférieure 213 est correctement placée, elle exerce un effort suffisant contre le capteur de passage de ceinture C4 (et/ou obture celui-ci) activant ainsi le premier moyen indicateur D4 associé.

Lorsque l'élément de verrouillage mâle est correctement inséré dans l'élément de verrouillage femelle correspondant situé dans le siège 2 du véhicule et que l'utilisateur relâche l'élément de verrouillage mâle, la sangle inférieure 213 se plaque contre le capteur de passage de ceinture C3, situé dans le guidage et/ou passage inférieur gauche P3, afin d'activer le premier moyen indicateur D3 associé. Ainsi, les premiers moyens indicateurs D2, D3, D4 illuminés signifient que l'installation de la ceinture de sécurité 21 a correctement été effectuée.

Si toutefois l'installation est incorrecte, l'utilisateur (enfant et/ou adulte) peut être averti, par au moins l'un des seconds moyens indicateurs D2', D3', D4' (clignotement d'un ou plusieurs indicateurs, changement de couleur (blanc ou rouge tant que l'installation n'est pas correcte, vert lorsque l'installation est correcte, par exemple...) et/ou un signal sonore notamment, qu'il est nécessaire de replacer la ceinture de sécurité. En variante, on peut prévoir que les premiers indicateurs clignotent, tant que l'installation correspondante n'est pas correcte.

La figure 2b illustre la mise en œuvre de premiers moyens indicateurs D1, D3, D4 et de seconds moyens indicateurs D1', D3', D4' du cheminement des sangles de la ceinture de sécurité et/ou de leurs bons positionnements lorsque le siège auto 1 est situé sur le siège 2 gauche du véhicule. La mise en œuvre est symétrique à celle décrite ci-dessus.

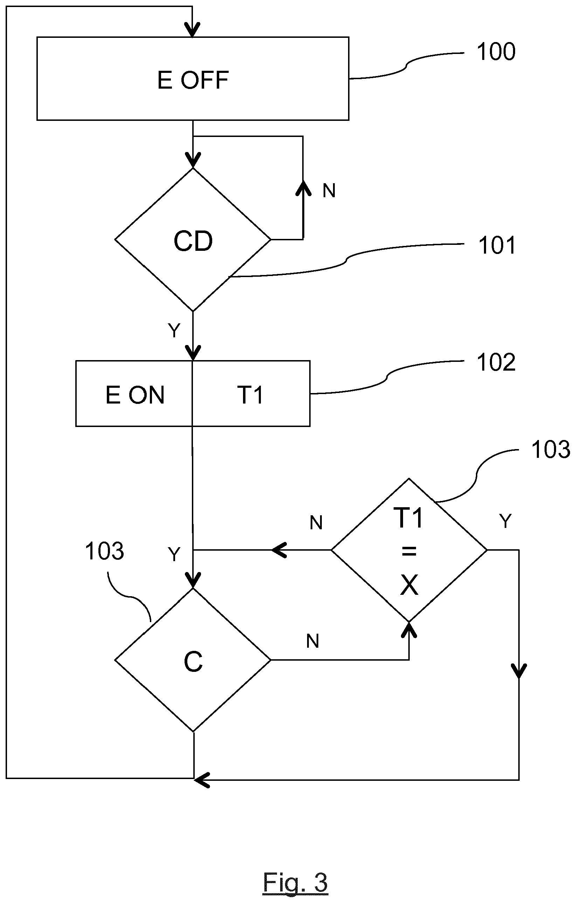

La figure 3 illustre de façon schématique un exemple de procédé de gestion mis en œuvre par les moyens d'activation 14 du moyen d'éclairage E de la figure 1.

A l'état initial, étape 100, le moyen d'éclairage E est désactivé et les moyens d'activation 14 sont en veille. La consommation énergétique de la batterie B est ainsi minimisée lorsqu'aucun enfant n'est présent dans le siège auto.

Lorsque les moyens de détection CD (par exemple un capteur de poids ou de présence dans l'assise) détectent l'installation d'un enfant (étape 101), les moyens d'activation 14 activent le moyen d'éclairage E ainsi qu'une temporisation T1 (étape 102). La durée X de la temporisation T1 est déterminée en fonction du temps nécessaire estimé pour qu'un enfant ou un adulte verrouille la ceinture de sécurité 21 avec l'élément de verrouillage 22. La durée de la temporisation T1 peut, par exemple, être fixée entre 15 et 30 secondes, laissant ainsi suffisamment de temps à un enfant pour pouvoir verrouiller seul la ceinture de sécurité.

À l'étape 103, si le capteur de passage de ceinture C est activé, signifiant que la ceinture de sécurité est verrouillée (tension suffisante détectée, par exemple), alors le procédé d'activation retourne à l'étape initiale 100 afin de désactiver le moyen d'éclairage E. L'étape 104 permet de retourner automatiquement à l'étape initiale 100 lorsque le temps prédéterminé X par la temporisation T1 est atteint ou écoulé. Une telle configuration permet d'éviter que le moyen d'éclairage E reste activé indéfiniment si le capteur de passage de ceinture C n'est pas activé.

Il peut être envisagé qu'un tel capteur de passage de ceinture C ne soit pas utilisé. Dans ce cas, le moyen d'éclairage E est désactivé automatiquement lorsque le temps X prédéterminé par la temporisation T1 est atteint.

Il peut également être envisagé que le procédé d'activation déclenche une alerte sonore et/ou visuelle lorsque la temporisation est atteinte avant de retourner à l'étape initiale.

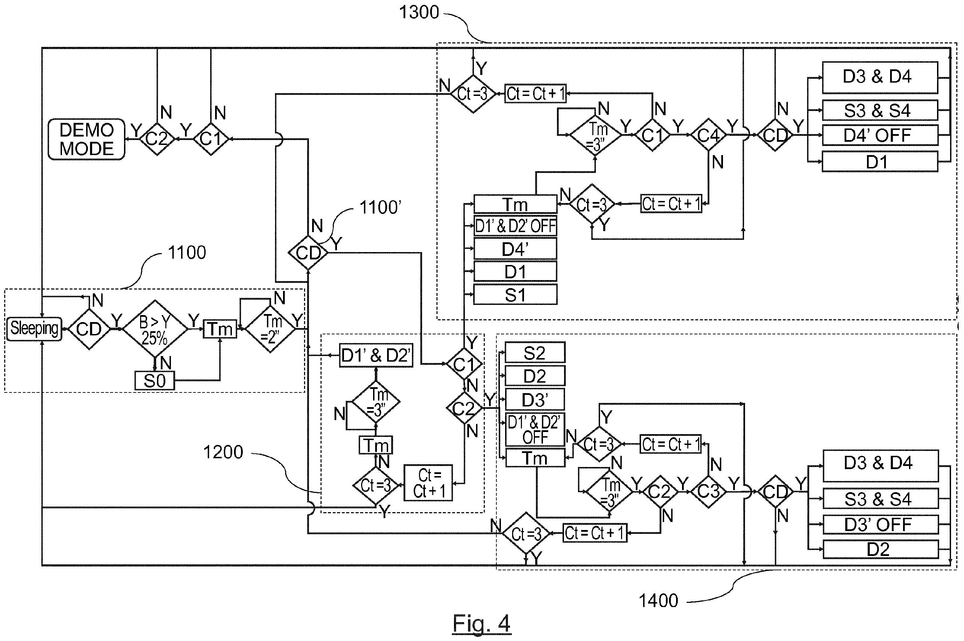

La figure 4 présente un organigramme détaillé d'un exemple de procédé d'activation de moyens lumineux tels que mis en œuvre dans le siège auto illustré à la figure 2a et 2b.

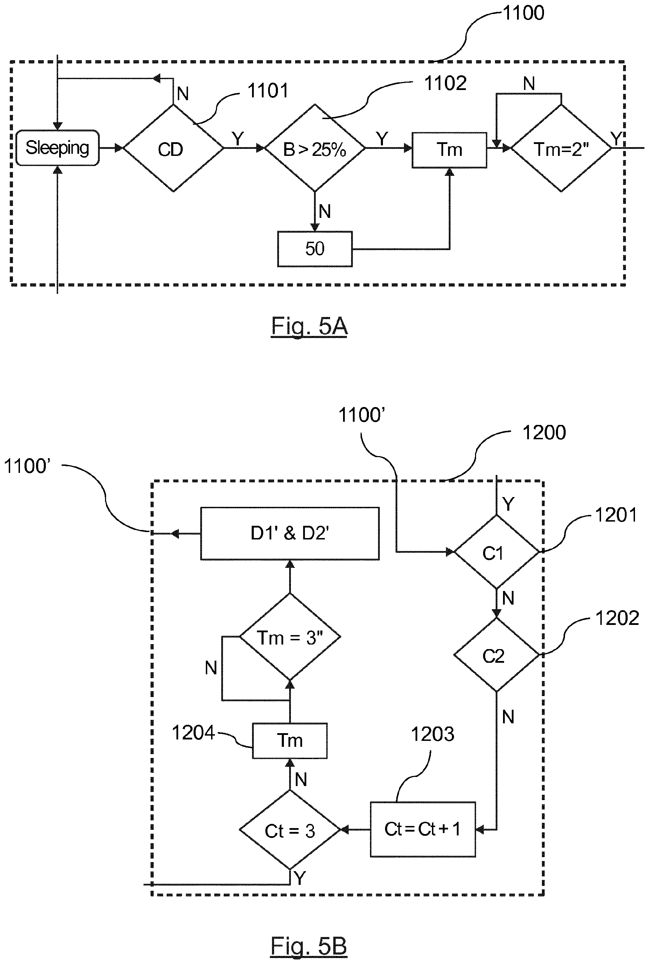

L'organigramme tel que représenté comprend plusieurs blocs 1100, 1100', 1200, 1300 et 1400 regroupant plusieurs étapes du procédé d'activation des moyens lumineux. Les figures 5a à 5d, détaillées par la suite, se focalisent respectivement sur les blocs 1100, 1200, 1300 et 1400.

À l'état initial les moyens lumineux, à savoir les premiers moyens indicateurs D1, D2, D3 et D4 (blancs par exemple) et les seconds moyens indicateurs D1', D2', D3' et D4' (verts par exemple), sont désactivés et les moyens de commande des moyens lumineux sont en veille.

Tel qu'illustré sur la figure 5a, à l'étape 1101, si les moyens de détection CD détectent la présence d'un enfant, les moyens de commande s'activent et les moyens de mesure de charge déterminent le niveau de charge de la batterie B.

À l'étape 1102, si le niveau de charge de la batterie B est inférieur à un seuil prédéterminé alors les moyens de commande activent une alarme S0 informant ainsi l'utilisateur que le rechargement ou le remplacement de la batterie est nécessaire.

Dans l'exemple illustré, une alarme sonore est activée si le niveau de charge de la batterie est inférieur à 25 %. Une telle valeur de seuil permet à l'utilisateur d'être averti que le niveau de charge est faible tout en permettant à la batterie, au moins lors du premier avertissement sonore, d'alimenter les moyens lumineux durant l'installation de la ceinture de sécurité. Les prochaines étapes sont réalisées indépendamment du niveau de charge de la batterie.

L'étape 1100', visible sur la figure 4, est une étape intermédiaire permettant de s'assurer à plusieurs reprises durant le déroulement du procédé que l'enfant est présent dans le siège auto. À défaut, les moyens de commande des moyens lumineux retournent, directement ou non, veille.

Tel que visible sur la figure 5b, durant l'étape 1201, si la présence de l'enfant est détectée (étape 1100') et que le capteur de passage de ceinture supérieur gauche C1 ne détecte pas la présence de la ceinture de sécurité, alors les moyens de commande passent à l'étape 1202.

À l'étape 1202, si le capteur de passage de ceinture supérieur droit C2 ne détecte pas la présence de la ceinture de sécurité, alors les moyens de commande activent, après incrémentation d'un compteur Ct (étape 1203) et activation d'une temporisation Tm (étape 1204), les seconds moyens indicateurs supérieurs D1', D2' du siège auto.

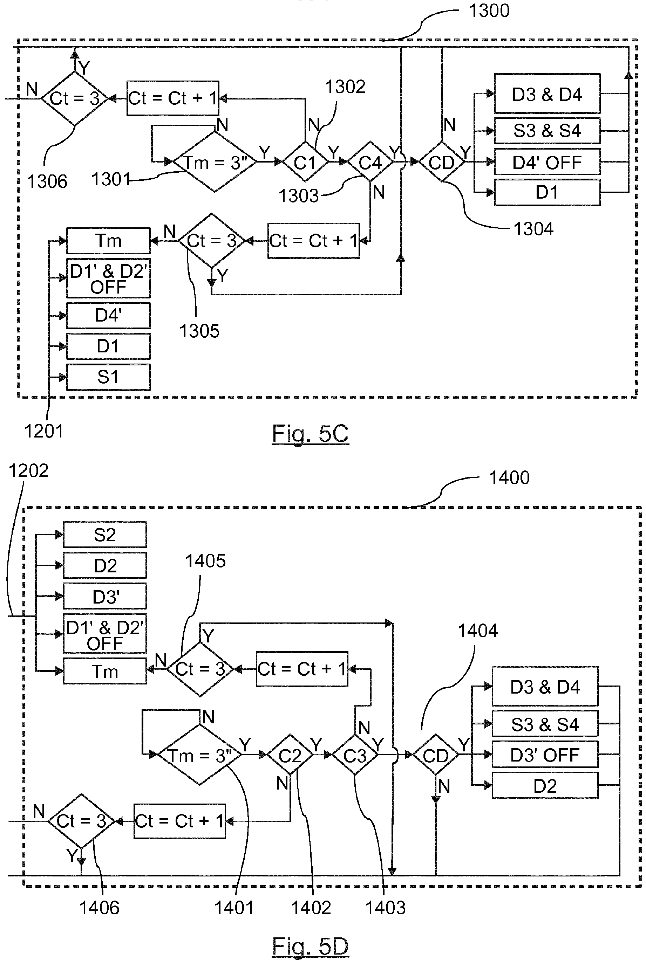

La figure 5c, détaillant le bloc 1300, décrit le fonctionnement du procédé d'activation de moyens lumineux lorsque le siège auto est installé du côté gauche du véhicule, ce qui incite l'enfant ou l'adulte à utiliser le passage de ceinture supérieur gauche P1 du siège auto.

Le procédé d'activation de moyens lumineux accède au bloc 1300 lorsque que toutes les conditions de l'étape 1201 sont validées, à savoir la présence de l'enfant dans le siège auto et que le capteur de passage de ceinture supérieur gauche C1 détecte la présence de la ceinture de sécurité, les seconds moyens indicateurs supérieurs D1', D2' se désactivent tandis que le second moyen indicateur inférieur droit D4', le premier moyen indicateur supérieur gauche D1 et le moyen sonore S1 associé s'activent.

L'activation du premier moyen indicateur supérieur gauche D1 et du moyen sonore S1 associé permettent de confirmer que la ceinture est correctement installée contre le passage de ceinture supérieur gauche P1 du siège auto. L'activation du second moyen indicateur inférieur droit D4' permet d'attirer l'attention de l'enfant ou de l'adulte sur le passage de ceinture inférieur droit P4.

L'étape 1301 permet de temporiser le procédé d'activation de moyens lumineux. Puis à l'étape 1302, le procédé d'activation contrôle l'état du capteur de passage de ceinture supérieur gauche C1 afin de s'assurer que la ceinture de sécurité soit encore présente dans le passage de ceinture supérieur gauche P1. Si la condition est validée le procédé d'activation passe à l'étape 1303 sinon, le procédé d'activation incrémente un compteur Ct. Si la valeur du compteur Ct est égale à une valeur prédéterminée (étape 1306), par exemple 3, le procédé d'activation se reboucle sur l'étape 1100' sinon, le procédé d'activation de moyen lumineux du siège auto retourne en veille.

Lors de l'étape 1303, le capteur de passage de ceinture inférieur droit C4 s'assure que la ceinture de sécurité soit présente contre le passage de ceinture inférieur droit P4. Si la condition est validée le procédé d'activation passe à l'étape 1304 sinon, le procédé d'activation incrémente un compteur Ct qui se reboucle sur l'étape 1301. Si la valeur du compteur Ct est égale à une valeur prédéterminée (étape 1305), par exemple trois, le procédé d'activation de moyen lumineux du siège auto retourne en veille.
L'étape 1304 est une dernière vérification de la présence de l'enfant dans le siège auto. Si la condition n'est pas validée, le procédé d'activation de moyen lumineux du siège auto retourne en veille.

Si la condition est validée, les premiers moyens indicateurs inférieurs gauche D3 et droit D4 ainsi que les moyens sonores S3, S4 s'activent. En outre, le premier moyen indicateur supérieur gauche D1 reste activé tandis que le second moyen indicateur inférieur droit D4' se désactive. Dans un mode de réalisation, les moyens sonores S3, S4 et les moyens indicateurs D1, D3 et D4 sont temporairement activés, par exemple une seconde, et/ou peuvent être activés par intermittence. Puis, le procédé d'activation de moyen lumineux du siège auto retourne en veille.

La figure 5d, focalisée sur le bloc 1400, décrit le fonctionnement du procédé d'activation de moyens lumineux lorsque le siège auto est installé du côté droit du véhicule et que l'enfant ou à l'adulte doit utiliser le passage de ceinture supérieur droit P2 du siège auto.

Le procédé d'activation de moyens lumineux accède au bloc 1400 lorsque toutes les conditions de l'étape 1202 sont validées, à savoir que le capteur de passage de ceinture supérieur droit C2 détecte la présence de la ceinture de sécurité. À ce stade du procédé, les seconds moyens indicateurs supérieurs D1', D2' se désactivent tandis que le second moyen indicateur inférieur gauche D3', le premier moyen indicateur supérieur droit D2 et le moyen sonore S2 s'activent.

L'activation du premier moyen indicateur supérieur droit D2 et du moyen sonore S2 associé permet d'indiquer que la ceinture est correctement installée contre le passage de ceinture supérieur droit P2 du siège auto. L'activation du second moyen indicateur inférieur gauche D3' permet d'attirer l'attention de l'enfant ou de l'adulte sur le passage de ceinture inférieur gauche P3.

L'étape 1401 permet de temporiser le procédé d'activation de moyens lumineux. Puis à l'étape 1402, le procédé d'activation contrôle l'état du capteur de passage de ceinture supérieur droit C2 afin de s'assurer que la ceinture de sécurité soit encore présente dans le passage de ceinture supérieur droit P2. Si la condition est validée le procédé d'activation passe à l'étape 1403 sinon, le procédé d'activation incrémente un compteur Ct. Si la valeur du compteur Ct est égale à une valeur prédéterminée (étape 1406), par exemple 3, le procédé d'activation se reboucle sur l'étape 1100' sinon, le procédé d'activation des moyens lumineux du siège auto retourne en veille.

Lors de l'étape 1403, le capteur de passage de ceinture inférieur gauche C3 s'assure que la ceinture de sécurité soit présente contre le passage de ceinture inférieur gauche P3. Si la condition est validée le procédé d'activation passe à l'étape 1404 sinon, le procédé d'activation incrémente un compteur Ct qui se reboucle sur l'étape 1401. Si la valeur du compteur Ct est égale à une valeur prédéterminée (étape 1405), par exemple 3, le procédé d'activation des moyens lumineux du siège auto retourne en veille.

L'étape 1404 est une dernière vérification de la présence de l'enfant dans le siège auto. Si la condition n'est pas validée, le procédé d'activation des moyens lumineux du siège auto retourne en veille.

Si la condition est validée, les premiers moyens indicateurs inférieurs gauche D3 et droit D4 ainsi que les moyens sonores S3, S4 s'activent. En outre, le premier moyen indicateur supérieur droit D2 reste activé tandis que le second moyen indicateur inférieur gauche D3' se désactive. Dans un mode de réalisation, les moyens sonores S3, S4 et les premiers moyens indicateurs D1, D3 et D4 sont temporairement activés, par exemple une seconde, et/ou peuvent être activés par intermittence. Puis, le procédé d'activation des moyens lumineux du siège auto retourne en veille.

En d'autres termes, le bloc 1400 est l'équivalent du bloc 1300 configuré pour fonctionner du côté opposé du véhicule, à savoir le côté droit.

Dans le mode de réalisation tel que décrit, les premiers moyens indicateurs sont de préférence des diodes électroluminescentes de couleur verte tandis que les seconds moyens indicateurs sont de préférence des diodes électroluminescentes de couleur blanche. Toutefois, tout autre moyen lumineux et/ou couleur permettant d'indiquer l'état de l'installation de la ceinture de sécurité peuvent être envisagés.

Il peut également être envisagé, en alternative, que le siège auto met en œuvre un unique moyen indicateur et/ou un unique moyen sonore s'activant uniquement lorsque les capteurs de passage de ceinture, selon le côté duquel est installé le siège auto sur le siège du véhicule, détectent simultanément un effort exercé par la ceinture de sécurité.

Il conviendrait toutefois que l'unique moyen indicateur soit configuré pour pouvoir émettre des différents signaux, par exemple en faisant varier la couleur, l'intensité, le clignotement...

Selon les modes de réalisation, les moyens indicateurs assurent généralement un éclairage, en fonction de la puissance sélectionnée. D'une façon générale, les moyens indicateurs sont constitués par des diodes LED, dont la lumière éclaire au moins légèrement les zones auxquelles elles sont associées.

Des moyens de détection de l'installation du siège à gauche ou à droite dans le véhicule peuvent être prévus (par exemple en prenant en compte le capteur supérieur activé), pour assurer l'activation de l'éclairage et/ou des indicateurs de façon adaptée. Alternativement, un interrupteur peut être prévu, par exemple sous l'assise (de façon qu'il soit inaccessible une fois que l'enfant est installé), permettant à un adulte de sélectionner un côté.

Bien évidemment, l'invention n'est pas limitée aux modes de réalisation décrits précédemment et fournis uniquement à titre d'exemple. Elle englobe diverses modifications, formes alternatives et autres variantes que pourra envisager l'homme du métier dans le cadre de la présente invention telle que revendiquée et notamment toutes combinaisons des différents modes de fonctionnement décrits précédemment, pouvant être pris séparément ou en association.

## Revendications

1. Siège auto (1) pour enfant, comprenant au moins une assise (11) et des moyens de guidage et/ou de maintien d'une sangle (P) de ceinture de sécurité (21) d'un véhicule automobile, et des moyens d'éclairage (E), montés sur au moins un côté dudit siège et orientés vers l'extérieur de celui-ci, aptes à éclairer un espace de verrouillage de ladite ceinture de sécurité, de façon à permettre à un enfant installé dans ledit siège de repérer un élément femelle (22) de verrouillage devant recevoir un élément mâle (211) correspondant monté sur ladite ceinture de sécurité (21),
**caractérisé en ce qu'**il comprend des moyens de détection (CD) de présence dudit enfant coopérant avec des moyens d'activation (14) desdits moyens d'éclairage (E), de façon à activer lesdits moyens d'éclairage (E) lorsqu'un enfant s'installe dans ledit siège.

2. Siège auto (1) pour enfant selon la revendication 1, **caractérisé en ce que** lesdits moyens de détection (CD) comprennent au moins un capteur de poids dans ladite assise (11) et/ou dans un dossier (13) dudit siège.

3. Siège auto (1) pour enfant selon l'une quelconque des revendications 1 et 2, **caractérisé en ce qu'**il comprend des moyens de temporisation, interrompant l'éclairage au-delà d'un laps de temps prédéterminé.

4. Siège auto (1) pour enfant selon l'une quelconque des revendications 1 à 3, **caractérisé en ce qu'**il comprend des moyens d'éclairage (E) sur chaque côté dudit siège.

5. Siège auto (1) pour enfant selon l'une quelconque des revendications 1 à 3, **caractérisé en ce qu'**il comprend des moyens d'éclairage (E) uniques, amovibles de façon à pouvoir être montés sur l'un ou l'autre des côtés dudit siège.

6. Siège auto (1) pour enfant selon l'une quelconque des revendications 1 à 5, **caractérisé en ce qu'**il comprend au moins un indicateur lumineux (D1, D2, D3, D4), placé à proximité d'un passage de sangle (P1, P2, P3, P4) de ladite ceinture de sécurité (21), de façon à aider ledit enfant présent dans le siège à installer seul ladite ceinture de sécurité (21).

7. Siège auto (1) pour enfant selon la revendication 6, **caractérisé en ce que** ledit passage de sangle (P1, P2, P3, P4) est associé à un capteur (C1, C2, C3, C4) de présence et/ou de tension de sangle, assurant une extinction, un clignotement et/ou un changement de couleur de l'indicateur lumineux (D1, D2, D3, D4) lorsque ladite sangle est placée et/ou est tendue dans ledit passage de sangle (P1, P2, P3, P4).

8. Siège auto (1) pour enfant selon l'une quelconque des revendications 6 et 7, **caractérisé en ce qu'**il comprend des moyens de séquencement de l'allumage, de l'extinction, du clignotement et/ou du changement de couleur dudit au moins un indicateur lumineux (D1, D2, D3, D4) et/ou desdits moyens d'éclairage (E).

9. Siège auto (1) pour enfant selon la revendication 8, **caractérisé en ce qu'**il porte au moins deux indicateurs lumineux (D1, D2, D3, D4) et au moins deux passages de sangle (P1, P2, P3, P4) distincts, et **en ce que** l'allumage desdits indicateurs lumineux (D1, D2, D3, D4) suit le cheminement de ladite ceinture de sécurité (21) lors de son installation.

10. Siège auto pour enfant selon l'une quelconque des revendications 8 et 9, **caractérisé en ce que** lesdits moyens de séquencement génèrent au moins un signal lumineux et/ou sonore confirmant une installation et/ou un verrouillage corrects de ladite ceinture de sécurité (21).

11. Siège auto (1) pour enfant selon l'une quelconque des revendications 1 à 10, **caractérisé en ce qu'**il comprend des moyens de sélection d'une position dudit siège, par rapport audit élément femelle (22) de verrouillage, sélectionnant un côté dudit siège à éclairer par lesdits moyens d'éclairage (E) et/ou dudit au moins un indicateur lumineux (D1, D2, D3, D4) à activer.

12. Procédé d'aide à l'installation d'une sangle de ceinture de sécurité (21) d'un véhicule automobile dans un siège auto (1) pour enfant comprenant des moyens d'éclairage (E), montés sur au moins un côté dudit siège et orientés vers l'extérieur de celui-ci, aptes à éclairer un espace de verrouillage de ladite ceinture de sécurité (21), de façon à permettre à un enfant installé dans ledit siège (1) de repérer un élément femelle (22) de verrouillage devant recevoir un élément mâle (211) correspondant monté sur ladite ceinture de sécurité (21),
**caractérisé en ce qu'**il comprend les étapes de :
- détection de présence dudit enfant ;
- activation desdits moyens d'éclairage (E), de façon à activer lesdits moyens d'éclairage (E) lorsque ladite étape de détection indique qu'un enfant s'installe dans ledit siège.

13. Procédé selon la revendication 12, **caractérisé en ce qu'**il comprend une étape d'allumage d'au moins un indicateur lumineux (D1, D2, D3, D4), placé à proximité d'un passage de sangle (P1, P2, P3, P4) de ladite ceinture de sécurité (21), piloté de façon à aider ledit enfant présent dans le siège à installer seul ladite ceinture de sécurité (21).

## Patentansprüche

1. Auto-Kindersitz (1), umfassend mindestens eine Sitzfläche (11) und Mittel zum Führen und/oder zum Halten eines Riemens (P) eines Sicherheitsgurtes (21) eines Kraftfahrzeuges, und Beleuchtungsmittel (E), die auf mindestens einer Seite des Sitzes montiert und nach außen von diesem gerichtet sind, die dazu geeignet sind, einen Verriegelungsbereich des Sicherheitsgurtes zu beleuchten, so dass es einem in dem Sitz platzierten Kind ermöglicht wird, ein Verriegelungs-Aufnahmeelement (22) vor der Aufnahme eines entsprechenden Steckerelementes (211), das an dem besagten Sicherheitsgurt (21) befestigt ist, ausfindig zu machen,
**dadurch gekennzeichnet, dass** er Mittel zur Erfassung (CD) der Anwesenheit des Kindes umfasst, die mit den Aktivierungsmitteln (14) der Beleuchtungsmittel (E) zusammenwirken, so dass die Beleuchtungsmittel (E) aktiviert werden, wenn ein Kind im Sitz Platz nimmt.

2. Auto-Kindersitz (1) nach Anspruch 1, **dadurch gekennzeichnet, dass** die Mittel zur Erfassung (CD) mindestens einen Gewichtssensor in der Sitzfläche (11) und/oder in der Rückenlehne (13) des Sitzes umfassen.

3. Auto-Kindersitz (1) nach einem der Ansprüche 1 und 2, **dadurch gekennzeichnet, dass** er Verzögerungsmittel umfasst, die die Beleuchtung nach Ablauf einer vorher festgelegten Zeitspanne unterbrechen.

4. Auto-Kindersitz (1) nach einem der Ansprüche 1 bis 3, **dadurch gekennzeichnet, dass** er Beleuchtungsmittel (E) auf jeder Seite des Sitzes umfasst.

5. Auto-Kindersitz (1) nach einem der Ansprüche 1 bis 3, **dadurch gekennzeichnet, dass** er einzelne, abnehmbare Beleuchtungsmittel (E) umfasst, dergestalt, dass sie auf der einen oder der anderen Seite des Sitzes montiert werden können.

6. Auto-Kindersitz (1) nach einem der Ansprüche 1 bis 5, **dadurch gekennzeichnet, dass** er mindestens eine Leuchtanzeige (D1, D2, D3, D4) umfasst, die dicht bei einer Riemendurchführung (P1, P2, P3, P4) des Sicherheitsgurtes (21) angeordnet ist, so dass das in dem Sitz befindliche Kind unterstützt wird, den Sicherheitsgurt (21) alleine anzulegen.

7. Auto-Kindersitz (1) nach Anspruch 6, **dadurch gekennzeichnet, dass** die Riemendurchführung (P1, P2, P3, P4) mit einem Anwesenheits- und/oder Riemenspannungs-Sensor (C1, C2, C3, C4) verbunden ist, der ein Erlöschen, ein Blinken und/oder einen Farbwechsel der Leuchtanzeige (D1, D2, D3, D4) sicherstellt, wenn der Riemen eingeführt wurde und/oder in der Riemendurchführung (P1, P2, P3, P4) gespannt ist.

8. Auto-Kindersitz (1) nach einem der Ansprüche 6 und 7, **dadurch gekennzeichnet, dass** er Mittel zur Sequenzierung des Einschaltens, des Erlöschens, des Blinkens und/oder des Farbwechsels der mindestens einen Leuchtanzeige (D1, D2, D3, D4) und/oder der Beleuchtungsmittel (E) umfasst.

9. Auto-Kindersitz (1) nach Anspruch 8, **dadurch gekennzeichnet, dass** er mindestens zwei Leuchtanzeigen (D1, D2, D3, D4) und mindestens zwei verschiedene Riemendurchführungen (P1, P2, P3, P4) aufweist, und dadurch, dass das Einschalten der Leuchtanzeigen (D1, D2, D3, D4) dem Weg des Sicherheitsgurtes (21) bei seinem Anlegen folgt.

10. Auto-Kindersitz nach einem der Ansprüche 8 und 9, **dadurch gekennzeichnet, dass** die Mittel zur Sequenzierung mindestens ein Leuchtsignal und/oder Tonsignal erzeugen, das ein korrektes Anlegen und/oder korrektes Verriegeln des Sicherheitsgurtes (21) bestätigt.

11. Auto-Kindersitz (1) nach einem der Ansprüche 1 bis 10, **dadurch gekennzeichnet, dass** er Mittel zur Auswahl einer Position des Sitzes in Bezug auf das Verriegelungs-Aufnahmeelement (22) umfasst, die eine Seite des Sitzes auswählen, die durch die Beleuchtungsmittel (E) und/oder von der mindestens einen zu aktivierenden Leuchtanzeige (D1, D2, D3, D4) zu beleuchten ist.

12. Unterstützendes Verfahren für das Anlegen eines Riemens eines Sicherheitsgurtes (21) eines Kraftfahrzeugs in einem Auto-Kindersitz (1), der Beleuchtungsmittel (E) umfasst, die auf mindestens einer Seite des Sitzes montiert und nach außen von diesem gerichtet sind, die dazu geeignet sind, einen Verriegelungsbereich des Sicherheitsgurtes (21) zu beleuchten, so dass es einem in dem Sitz (1) platzierten Kind ermöglicht wird, ein Verriegelungs-Aufnahmeelement (22) vor der Aufnahme eines entsprechenden Steckerelementes (211), das an dem Sicherheitsgurt (21) befestigt ist, ausfindig zu machen, **dadurch gekennzeichnet, dass** es die Schritte umfasst:
- Erfassung der Anwesenheit des Kindes;
- Aktivierung der Beleuchtungsmittel (E), dergestalt, dass die Beleuchtungsmittel (E) aktiviert werden, wenn der Erfassungsschritt angibt, dass ein Kind in dem Sitz Platz nimmt.

13. Verfahren nach Anspruch 12, **dadurch gekennzeichnet, dass** es einen Schritt zum Einschalten von mindestens einer Leuchtanzeige (D1, D2, D3, D4) umfasst, die dicht bei einer Riemendurchführung (P1, P2, P3, P4) des Sicherheitsgurtes (21) angebracht ist, die so gesteuert wird, dass das in dem Sitz befindliche Kind dabei unterstützt wird, den Sicherheitsgurt (21) alleine anzulegen.

## Claims

1. Child car seat (1), comprising at least one seat portion (11) and means for guiding and/or retaining a strap (P) of a safety belt (21) of a motor vehicle, and means of lighting (E), mounted on at least one side of said seat and oriented towards the exterior of the latter, able to illuminate a locking space of said safety belt, in such a way as to allow a child installed in said seat to locate a female locking element (22) that is to receive a corresponding male element (211) mounted on said safety belt (21), **characterised in that** it comprises means for detecting (CD) the presence of said child cooperating with means for activating (14) said means of lighting (E), in such a way as to activate said means of lighting (E) when a child sits in said seat.

2. Child car seat (1) according to claim 1, **characterised in that** said means for detecting (CD) comprise at least one weight sensor in said seat portion (11) and/or in a seat back (13) of said seat.

3. Child car seat (1) according to any of claims 1 and 2, **characterised in that** it comprises timing means, interrupting the lighting beyond a predetermined lapse of time.

4. Child car seat (1) according to any of claims 1 to 3, **characterised in that** it comprises means of lighting (E) on each side of said seat.

5. Child car seat (1) according to any of claims 1 to 3, **characterised in that** it comprises a single means of lighting (E), removable in such a way as to be able to be mounted on one or the other of the sides of said seat.

6. Child car seat (1) according to any of claims 1 to 5, **characterised in that** it comprises at least one indicator light (D1, D2, D3, D4), placed in the vicinity of a strap passage (P1, P2, P3, P4) of said safety belt (21), in such a way as to assist said child present in the seat in installing said safety belt (21) himself.

7. Child car seat (1) according to claim 6, **characterised in that** said passage of a strap (P1, P2, P3, P4) is associated with a sensor (C1, C2, C3, C4) of the presence and/or of the tension of the strap, providing an extinguishing, a blinking and/or a change in the colour of the indicator light (D1, D2, D3, D4) when said strap is placed and/or is taut in said strap passage (P1, P2, P3, P4).

8. Child car seat (1) according to any of claims 6 and 7, **characterised in that** it comprises means for sequencing the lighting, the extinguishing, the blinking and/or the changing of the colour of said at least one indicator light (D1, D2, D3, D4) and/or of said means of lighting (E).

9. Child car seat (1) according to claim 8, **characterised in that** it carries at least two indicator lights (D1, D2, D3, D4) and at least two separate strap passages (P1, P2, P3, P4), and **in that** the lighting of said indicator lights (D1, D2, D3, D4) follows the path of said safety belt (21) during the installation thereof.

10. Child car seat according to any of claims 8 and 9, **characterised in that** said means for sequencing generate at least one light and/or audible signal confirming a correct installation and/or locking of said safety belt (21).

11. Child car seat (1) according to any of claims 1 to 10, **characterised in that** it comprises means for selecting a position of said seat, with respect to said female locking element (22), selecting a side of said seat to be illuminated by said means of lighting (E) and/or by said at least one indicator light (D1, D2, D3, D4) to be activated.

12. Method for assisting with the installation of a safety belt (21) strap of a motor vehicle in a car seat (1) for a child comprising means of lighting (E), mounted on at least one side of said seat and oriented towards the exterior of the latter, able to illuminate a locking space of said safety belt (21), in such a way as to allow a child installed in said seat (1) to locate a female locking element (22) that is to receive a corresponding male element (211) mounted on said safety belt (21),
**characterised in that** it comprises the steps of:
- detecting the presence of said child;
- activating said means of lighting (E), in such a way as to activate said means of lighting (E) when said step of detecting indicates that a child is sitting down into said seat.

13. Method according to claim 12, **characterised in that** it comprises a step of lighting of at least one indicator light (D1, D2, D3, D4), placed in the vicinity of a strap passage (P1, P2, P3, P4) of said safety belt (21), controlled in such a way as to assist said child present in the seat in installing said safety belt (21) himself.
